# EUROPÄISCHE PATENTSCHRIFT

(11) **EP 0 571 943 B1**
(45) Veröffentlichungstag und Bekanntmachung des Hinweises auf die Patenterteilung: **28.08.1996**
(21) Anmeldenummer: 93108414.9
(22) Anmeldetag: 25.05.1993
(51) Int. Cl.: F16L 49/02, F16L 21/06, F16L 13/10

(54) **Rohrverbindung für Rauchgasleitungen**
Pipe connection for exhaust pipes
Raccord de tuyaux pour ligne d'échappement

(30) Priorität: 29.05.1992 DE 4217671
(43) Veröffentlichungstag der Anmeldung: 01.12.1993
(73) Patentinhaber: Schott-Rohrglas GmbH, D-95448 Bayreuth (DE)
(72) Erfinder: Männl, Reinhard, W-8596 Mitterteich (DE); Jung, Herbert, W-8485 Floss (DE)
(74) Vertreter: Fuchs, Luderschmidt & Partner Patentanwälte

(56) Entgegenhaltungen:
- DE-A- 724 560
- US-A- 1 352 571
- US-A- 1 414 800
- US-A- 1 463 692
- US-A- 1 510 483
- US-A- 1 960 249
- US-A- 2 322 587
- US-A- 5 118 139
- DATABASE WPI Section Ch, Week 7941, Derwent Publications Ltd., London, GB; Class A12, AN 79-74650B & JP-B-54 028 646 (ISHIKAWA, T.) 18. September 1979

## Beschreibung

Die vorliegende Erfindung betrifft eine Rohrverbindung und ein Verfahren zum Herstellen einer Rohrverbindung für Rauchgasleitungen, bei der ein gegebenenfalls als Überwurfmuffe ausgebildetes Ende eines ersten Rohres ein glattes Ende eines zweiten Rohres unter Bildung eines Spaltraumes übergreift. Unter Rauchgasleitungen werden nachfolgend sowohl Abgasleitungen zum Ableiten von Gas durch Überdruck als auch Gasleitungen zum Ableiten heißer, u.U. saurer Abgase durch thermischen Sog verstanden. Letztere Gasleitungen finden sich typischerweise als Schornsteinanordnungen, seit Einführung moderner Nieder-, Tieftemperatur- und/oder Brennwertkessel auch als in vorhandene Schornsteinanordnungen nachträglich eingebaute Rauchgasleitungen, sogenannte Querschnittsverminderungen.

Abgasleitungen und Querschnittsverminderungen für Schornsteine, sog. Schornsteininnenrohrsysteme, werden aus Rohren, die gegeneinander abgedichtet werden, hergestellt. Als Materialien für diese Rohre werden keramische Werkstoffe, Schamotte, Glas, aber auch metallische Werkstoffe, vorzugsweise Edelstahl, verwendet.

Obwohl identische Rohre für beide Arten von Leitung, Abgasleitung und Schornsteinleitungen, eingesetzt werden, gibt es bisher kein einheitliches Leitungs- und Dichtungssystem für Abgas- und Schornsteinleitungen, insbesondere Querschnittsverminderungen. Dies ist darauf zurückzuführen, daß jeweils unterschiedliche Anforderungen an die Abdichtung dieser Leitungen gestellt werden.

Dichtungen für Abgasleitungen müssen sicherstellen, daß das mit Überdruck abgegebene Abgas an den Rohrstößen ebenso wie anfallende kondensierende Feuchtigkeit nicht entweichen kann. Dichtungen für Schornsteinanordnungen werden dagegen durch hohe Abgastemperaturen und stark saure Kondensate beansprucht.

Edelstahlrohrabschnitte werden bei Abgasleitungen beispielsweise durch Silikon-Kautschuk-Dichtungen miteinander verbunden. Diese Silikon-Kautschuk-Dichtungen bieten zwar ausreichende Dichtigkeit bei wechselnden Druckverhältnissen, weisen jedoch nur eine begrenzte chemische wie auch Temperaturbeständigkeit auf. Edelstahlrohrabschnitte, die als Schornsteinanordnungen Verwendung finden, werden dagegen durch einfache Steckverbindungen montiert.

Keramische Leitungen, auch Leitungen aus Schamotte, werden für Abgasleitungen ebenfalls mit Silikondichtungen, hier als Silikonmanschetten, abgedichtet. Üblicherweise findet in Abgasleitungen glasierte Keramik Verwendung. Wegen der unzureichenden Säure- und Hitzebeständigkeit der Silikonmanschette werden die gleichen Rohrabschnitte bei Verwendung in Schornsteinanordnungen als Rohre mit Nut und Feder ausgeführt, die mit säurebeständigem Kitt verbunden werden. Diese Art der Verbindung durch Nut, Feder und Kitt ist jedoch nicht ausreichend dicht, um beispielsweise bei wechselnden Druckverhältnissen in Abgasleitungen sicherzustellen, daß das Abgas an den Rohrstößen nicht nach außen dringen kann.

Rohre aus Glas werden bei Verwendung für Abgasleitungen ebenfalls mit Silikon-Kautschuk-Dichtungen untereinander verbunden. Schornsteinanordnungen werden jedoch aufwendiger, beispielsweise nach dem in der DE-PS 38 21 019 beschriebenen Verfahren abgedichtet: Zwischen den Rohren aus Glas wird am Rohrstoß ein mineralischer Distanzring eingesetzt, der Rohrstoß wird von außen mit einem Mineralfaserband umwickelt, das mit anorganischem Kleber fixiert wird, und die abschließende Verbindung der beiden Rohre erfolgt durch ein Edelstahl-Klemmband. Auch diese Verbindung ist für die Verwendung von Abgasleitungen nicht ausreichend gasdicht.

Die unterschiedlichen Anforderungen für Dichtungssysteme zur Verwendung in Abgas- bzw. Schornsteinanordnungen gehen deutlich aus den Anforderungen hervor, die das Institut für Bautechnik (IfBt), Berlin, aufgestellt hat. Dichtungssysteme für Abgasleitungen müssen einem Druckwechsel von -1.000 mm WS bis +40 mm WS standhalten. Schornsteinanordnungen müssen dagegen Rauchgastemperaturen von 40-500°C standhalten können.

Überdies müssen Dichtungen für Schornsteinanordnungen, wie bereits oben ausgeführt, eine ausreichend hohe Säurebeständigkeit aufweisen, um nicht durch stark saure Kondensate, die u.a. von modernen Hausheizungssystemen wie Nieder-, Tieftemperatur- und/oder Brennwertkesseln abgegeben werden, zersetzt zu werden.

Wie aus der vorstehenden Beschreibung hervorgeht, ist, je nach Verwendungszweck der Rohre, eine jeweils für den Verwendungszweck spezifische Dichtung erforderlich. Diese Vielfalt erfordert nicht nur einen großen Herstellungs-, Vertriebs- und Lageraufwand, sondern es kann bei der Vielzahl der vorhandenen Systeme auch zu Einbaufehlern und damit zu u.U. gefährlichen Fehlfunktionen der Leitungssysteme kommen.

Rohrverbindungen zum abdichtenden Verbinden zweier Rohre sind zahlreich aus dem Stand der Technik bekannt; so beispielsweise aus der US 2,302,244. Weitere Schriften beschreiben das Zentrieren zweier einander übergreifender Rohrenden, wodurch ein gleichmäßiger, kreisringförmiger Spalt zum Einbringen der Dichtmasse vorgegeben wird. Derartige Zentriervorrichtungen sind z.B. Gegenstand der US 2,310,122 und der DE-GM 19 76 874. Nachteilig bei diesen Anordnungen ist, daß die zu verbindenden Rohrenden bis zum vollständigen Aushärten der Dichtmasse nicht bewegt werden dürfen, wenn die Dichtigkeit bzw. Festigkeit der Verbindung gewährleistet sein soll.

Aus der DE-AS-26 00 621 ist eine gattungsgemäße Rohrverbindung und ein gattungsgemäßes Verfahren zum abdichtenden Verbinden zweier Rohre bekannt. Vor dem Aushärten der Dichtmasse formt man mit einer Zange eine ringförmige Sicke. Die ein Fixiermittel darstellende Sicke verbindet die beiden Rohre unverschiebbar miteinander. Diese Maßnahme trifft man bei Flüssigkeitsleitungen, die unter einem hohem Druck stehen, um Leckstellen zu verhindern. Die ringförmige Sicke hat die Funktion, die aus dem Flüssigkeitsdruck resultierenden Axialkräfte an der Verbindungsstelle aufzunehmen.

Es ist daher Aufgabe der Erfindung, für eine Rohrverbindung und ein Verfahren ein Fixiermittel auszubilden, das ein Verrutschen oder Ablösen der Dichtmasse, allgemein eine Störung des Abbindens der Dichtmasse, verhindert, wenn die zu verbindenden Rohre vor dem Aushärten der Dichtmasse bewegt werden müssen.

Diese Aufgabe wird gelöst durch eine Rohrverbindung nach Anspruch 1 sowie durch ein Verfahren nach Anspruch 11.

Die erfindungsgemäße Rohrverbindung ist innerhalb oder außerhalb der Rohrenden im Bereich der Längserstreckung des Spaltraums angeordnet, der entsteht, wenn in ein ggf. als Überwurfmuffe ausgebildetes Ende eines ersten Rohres ein glattes Ende eines zweiten Rohres eingeführt ist. Der Spaltraum erstreckt sich mit einer gewissen Ausdehnung in axialer Richtung kreisringförmig um den Außenumfang des zweiten Rohres. In diesen Spaltraum wird eine anorganische Dichtmasse über den gesamten kreisförmigen Umfang des Spaltraumes eingebracht.

Die Dichtmasse muß den Spaltraum in axialer Richtung nicht vollständig ausfüllen; es ist ausreichend, wenn ein geschlossener, kreisringförmiger Wulst aus Dichtmasse im Spaltraum angeordnet ist.

Anorganische Dichtmassen mit ausreichender Säure-, Wasser- und Temperaturbeständigkeit, wie z.B. chemisch aushärtende Dichtmassen, härten oft nur sehr langsam aus. Da die gegeneinander abzudichtenden Rohre aber nach dem Abdichten meist noch in ihre endgültige Stellung bewegt werden müssen, werden erfindungsgemäß das erste und das zweite Rohr vor dem Einspritzen der Dichtmasse gegeneinander fixiert.

Um die gegeneinander abzudichtenden Rohrabschnitte während des Aushärtens der mineralischen Dichtmasse gegen Verdrehen zu sichern, ist das Fixieren dieser Rohrabschnitte ein punktuelles Auftragen eines schnell aushärtenden Klebers. Beispiele solcher schnell aushärtender Kleber sind u.a. UV-Kleber, lichtaushärtende Kleber und auch Zwei-Komponenten-Kleber.

Dadurch ist gewährleistet, daß die gegeneinander abzudichtenden Rohrabschnitte während des Aushärtens der mineralischen Dichtmasse nicht gegeneinander bewegt werden. Damit ist eine vollständige und sichere Abdichtung durch ungestörtes Aushärten der Dichtmasse im Bereich der überlappenden Rohrabschnitte gewährleistet.

Eine erfindungsgemäß aufgebaute Rohrverbindung, die unter Verwendung einer mineralischen Dichtmasse aufgebaut wird, ist insbesondere für die Verwendung bei Rohren beispielsweise aus Keramik, Glas oder Schamotte geeignet, da der thermische Ausdehnungskoeffizient der mineralischen Dichtmasse in etwa die gleiche Größenordnung aufweist wie der Ausdehnungskoeffizient keramischer Werkstoffe. Damit sind Abrisse oder sonstige Undichtigkeiten, die während des Aufheizens oder des Abkühlens von Rauchgasleitungen bei anderen Dichtungssystemen vorgekommen sind, ausgeschlossen.

Eine gemäß dem Verfahren des Patentanspruchs 11 aufgebaute Rohrverbindung ist ausreichend druckdicht, so daß sie ohne weiteres zum Abdichten von Abgasleitungen eingesetzt werden kann. Sie ist weiterhin ausreichend säure-, wasser- und temperaturbeständig, so daß sie ausgezeichnet zum Abdichten von beispielsweise Querschnittsverminderungen bei Schornsteinanordnungenn verwendet werden kann.

In bevorzugter, verbesserter Ausführungsform wird die erfindungsgemäße Rohrverbindung aufgebaut, indem bei senkrecht angeordneten Leitungen vor Einbringen der mineralischen Dichtmasse in den nach oben offenen Spaltraum zwischen den beiden gegeneinander abzudichtenden Rohren zunächst eine mineralische Rundschnur eingesetzt wird. Auf diese Rundschnur wird dann die mineralische Dichtmasse aufgetragen. Durch das Einsetzen der mineralischen Rundschnur wird auf der dem Rohrinneren zugewandten Seite der Rohrverbindung ein Hohlraum geschaffen, in den sich an der Rundschnur niederschlagende Kondensate abtropfen und in das Innere des Rohrsystems zurückgeführt werden können, ohne daß sie direkt an der mineralischen Dichtung angreifen. Mit dieser Maßnahme wird die Lebensdauer der Dichtung wesentlich erhöht. Eine mineralische Rundschnur wird deshalb bevorzugt eingesetzt, weil sich dadurch bei senkrechter Leitungsanordnung ein definierter Hohlraum im unteren Abschnitt des Spaltraums ausformen läßt. Dieser Hohlraum stellt eine konstruktive Maßnahme dar, die verhindern soll, daß über Kapillarkräfte Feuchtigkeit in die mineralische Rundschnur oder die darüberliegende Dichtung getragen wird. Außerdem ist die Rundschnur saugfähig und saugt überschüssige Feuchtigkeit, die beim Aushärten der anorganischen Dichtmasse entstehen kann, sofort auf, was dann den Aushärtevorgang entscheidend beschleunigt. Sie kann, wie oben beschrieben, nach Zusammenfügen der Rohre in den Spaltraum eingelegt werden, sie kann aber auch zur Vereinfachung der Handhabung bereits an einem der beiden ineinandergreifenden Rohrenden vormontiert sein.

Die erfindungsgemäße Rohrverbindung und das Verfahren zum Aufbauen dieser Rohrverbindung läßt sich ohne weiteres für alle bisher bekannten Werkstoffe, die zur Herstellung der Rohrabschnitte verwendet werden, einsetzen. Sie ist insbesondere geeignet für Glas, Schamotte, keramische Werkstoffe, seien sie glasiert oder unglasiert, sowie auch für metallische Werkstoffe, hier insbesondere für Edelstahl-Rohre.

Bei der Verwendung von Rohren aus Glas wird bevorzugt ein mineralischer Distanzring zwischen die Rohrstöße eingefügt, um Materialbeschädigungen zu vermeiden.

Nachstehend ist die erfindungsgemäße Rohrverbindung am Beispiel einiger bevorzugter Ausführungsformen näher beschrieben.

Es zeigt:
- Fig. 1: einen Schnitt durch ein Rohrleitungssystem mit erfindungsgemäß gegeneinander abgedichteten Rohren,
- Fig. 2: einen Schnitt durch ein Rohrleitungssystem, dessen Rohre mittels eines schnell aushärtenden Klebers vorfixiert wurden.

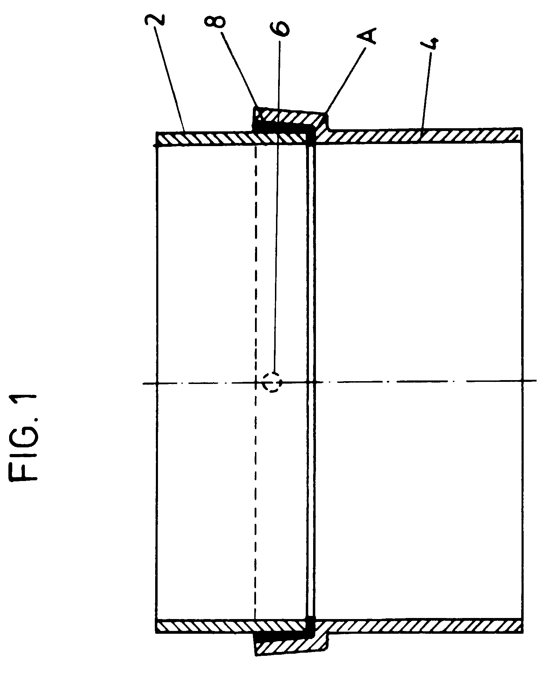

Fig. 1 zeigt einen Schnitt durch ein Rohrleitungssystem, bei dem in ein erstes Rohr aus Glas 4 mit aufgeweitetem Endbereich (Muffe) ein zweites Rohr 2, ebenfalls aus Glas, gesteckt wird. Die beiden Rohre werden durch punktuelles Auftragen eines UV-Klebers 6, der unter dem Licht einer UV-Lampe außerordentlich schnell aushärtet, gegeneinander fixiert.

Die Rohrstöße der beiden Rohre 2 und 4 sind durch Einfügen eines Distanzringes A aus mineralischem Material, das jedoch nicht abdichtend wirken muß, vor Beschädigung beim Aufsetzen geschützt. Der Distanzring ist in bevorzugter Ausführungsform am Rohr 4 fixiert. In den Spaltraum, der sich zwischen den überlappenden Bereichen des ersten und des zweiten Rohres ergibt, wird nach Fixieren mittels UV-Klebers nun eine anorganische Dichtmasse 8 eingefüllt. Die Dichtmasse 8 kann, wie hier in Fig. 1 gezeigt, den gesamten Spaltraum in axialer Richtung vollständig ausfüllen, es wäre jedoch ausreichend, nur einen Teil des Spaltraumes mit der Dichtmasse auszufüllen, um die gewünschte Gasdichtigkeit und Festigkeit der Verbindung zu erreichen. Als Dichtungsmaterial können alle abdichtenden Materialien eingesetzt werden, die ausreichend temperatur-, säure- und feuchtigkeitsstabil sind, insbesondere solche, wie sie bislang schon im Schornsteinbau Verwendung finden. Bevorzugt werden anorganische, chemisch aushärtende Dichtmassen verwendet, besonders bevorzugt an sich bekannte Zwei-Komponenten-Systeme auf Wasserglasbasis mit einem thermischen Ausdehnungskoeffizienten von ca. 3,3 - 12X10⁻⁶ K⁻¹. Aber auch Säurekitts, wie sie ebenfalls im Schornsteinbau schon bekannt sind (z.B. HES-Säurekitt der Fa. Hoechst), sind als Dichtmasse geeignet.

Die auf diese Weise vorfixierten und mit einer langsam härtenden anorganischen Dichtmasse 8 abgedichteten und verbundenen Rohre 2, 4 können nun in ihre endgültige Position, beispielsweise im Inneren eines bereits vorgemauerten Schornsteins, gebracht werden. Durch das Vorfixieren mittels UV-Kleber 6 ist sichergestellt, daß sich die bereits abgedichteten Rohrabschnitte nicht mehr gegeneinander bewegen, und damit die Dichtwirkung der mineralischen Dichtmasse 8 beeinträchtigen können.

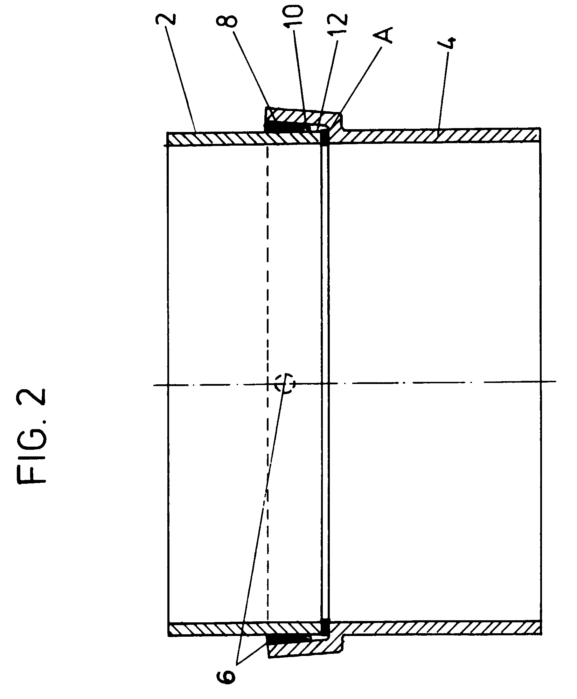

Fig. 2 zeigt ebenfalls einen Querschnitt durch ein senkrecht angeordnetes Rohrleitungssystem, bei dem zwei Rohre gegeneinander abgedichtet werden. Gleiche Bezugszeichen benennen in Fig. 2 dieselben Elemente mit derselben Funktion wie in Fig. 1, die hier nicht nochmals erläutert werden.

Fig. 2 zeigt eine Rohrverbindung, bei der zur verbesserten Ableitung von etwa anfallenden sauren Kondensaten, wie sie insbesondere bei abkühlenden Rauchgasen auftreten, der Aufbau der Dichtung durch eine Vorrichtung 10 ergänzt wird, an der sich etwa niederschlagendes Kondensat abtropfen kann. Dieses Dichtungssystem wird aufgebaut, indem nach Ineinanderfügen der Rohre 2 und 4 eine mineralische Rundschnurdichtung 10 in den nach oben offenen Spaltraum zwischen den beiden Rohren eingesetzt wird. Diese Rundschnurdichtung 10 bewirkt nicht nur ein verbessertes Abtropfen von Kondensaten in den unterhalb der Rundschnur gebildeten Hohlraum 12, sondern zusätzlich ermöglicht sie auch ein besseres Ausrichten des Glasrohres 2 in der Muffe des Rohres 4. Nach Einlegen der Rundschnurdichtung 10 wird der schnell aushärtende UV-Kleber 6 punktuell aufgetragen und nach Aushärten dieses Klebers wird das anorganische Dichtungsmaterial 8 auf die Rundschnurdichtung 10 in den Spalt zwischen den Rohren 2 und 4 eingetragen.

Die Anordnung der mineralischen Rundschnurdichtung 10 im Spaltraum zwischen den Rohrabschnitten 2 und 4 und der Spaltraum selbst sind so bemessen, daß ausreichend Raum für das Eintragen des anorganischen Dichtungsmaterials 8 verbleibt, so daß die beiden Rohre sicher miteinander verbunden und abgedichtet werden. Der zur Rohrinnenseite offene Hohlraum 12, der durch das Einlegen der Rundschnurdichtung 10 entsteht, ist so bemessen, daß sich niederschlagendes Kondensat an der Rundschnurdichtung 10 und an den Wänden der Rohre 2 und 4, die den Hohlraum 12 bilden, abtropfen und durch den mineralischen Distanzring A hindurch in das Innere der Rohrleitung zurücktropfen kann. Die Rundschnurdichtung 10 verhindert damit weiterhin, daß sich niederschlagende, saure Kondensate das mineralische Dichtungsmaterial angreifen.

Die in der Fig. 2 beschriebene Ausführungsform des Dichtungssystems mit Rundschnurdichtung gewährleistet nur bei senkrecht angeordneten Rohrleitungen ein einwandfreies Zurücktropfen des Kondensates in das Innere des Rohres. Bei nicht senkrechten Rohrleitungen müssen ggf. weitere konstruktive Maßnahmen (Abschrägen) getroffen werden, um eine Rückführung der Kondensate sicherzustellen.

## Patentansprüche

1. Rohrverbindung zum abdichtenden Verbinden zweier Rohre, insbesondere für Rauchgasleitungen, bei denen ein ggf. als Überwurfmuffe ausgebildetes Ende eines ersten Rohres (4) ein glattes Ende eines zweiten Rohres (2) unter Bildung eines Spaltraumes übergreift, und bei dem der Spaltraum mindestens teilweise in axialer Richtung, doch vollständig den kreisringförmigen Spalt ausfüllend, abdichtend mit einer anorganischen Dichtmasse (8) ausgefüllt ist, wobei die gegeneinander abzudichtenden Rohre (2, 4) durch Fixiermittel miteinander fixiert sind, dadurch gekennzeichnet, daß die Fixiermittel in den abzudichtenden Rohren (2, 4) durch Auftragen in Teilbereichen des Spaltraumes angebrachte Klebstellen aus einem schnell aushärtenden Kleber (6) sind.

2. Rohrverbindung nach Anspruch 1, dadurch gekennzeichnet, daß der schnell aushärtende Kleber ein mittels UV-Strahlung aushärtbarer Kleber (6) ist.

3. Rohrverbindung nach Anspruch 1 oder 2, dadurch gekennzeichnet, daß das Dichtungssystem auf der dem Inneren der Rohrleitung zugewandten Seite mit einer Vorrichtung (10) versehen ist, an der sich etwa aus dem Abgas bzw. der Abluft ausscheidendes Kondensat an dazu vorbestimmter Stelle niederschlägt und in das Innere der Rohrleitung zurücktropfen kann.

4. Rohrverbindung nach Anspruch 3, dadurch gekennzeichnet, daß die Vorrichtung (10) aus einer in den Spaltraum (B) eingelegten mineralischen Rundschnur (10) besteht.

5. Rohrverbindung nach einem der Ansprüche 14, dadurch gekennzeichnet, daß die gegeneinander abzudichtenden Rohre (2, 4) aus keramischen Werkstoffen, glasiert oder unglasiert, gefertigt sind.

6. Rohrverbindung nach einem der Ansprüche 14, dadurch gekennzeichnet, daß die gegeneinander abzudichtenden Rohre (2, 4) aus Glas gefertigt sind.

7. Rohrverbindung nach Anspruch 6, dadurch gekennzeichnet, daß das Ende des ersten Rohres (4) eine Muffe aufweist und daß in der Stoßfuge zwischen der Stirnseite des zweiten Rohrendes und der Innenschulter der Muffe des ersten Rohrendes ein Distanzring (A) aus mineralischem Material angeordnet ist.

8. Rohrverbindung nach einem der Ansprüche 14, dadurch gekennzeichnet, daß die gegeneinander abzudichtenden Rohre aus metallischem Werkstoff, vorzugsweise Edelstahl, gefertigt sind.

9. Rohrverbindung nach einem der Ansprüche 1-8, dadurch gekennzeichnet, daß die Dichtmasse (8) chemisch aushärtend ist.

10. Dichtmasse (8) für eine Rohrverbindung nach einem der Ansprüche 1-9, dadurch gekennzeichnet, daß die Dichtmasse (8) einen thermischen Ausdehnungskoeffizienten von 3,3 - 12 x 10⁻⁶K⁻¹ zur abdichtenden Verbindung von Rohren (2, 4) von Rauchgasleitungen aufweist.

11. Verfahren zum abdichtenden Verbinden zweier Rohre, insbesondere einer Rauchgasleitung, bei der ein ggf. als Überwurfmuffe ausgebildetes Ende eines ersten Rohres (4) ein glattes Ende eines zweiten Rohres (2) unter Bildung eines Spaltraumes übergreift, wobei nach Zusammenfügen der Rohrenden in den Spaltraum eine anorganische Dichtmasse (8) eingebracht wird, die dichtringbildend den Spaltraum in axialer Richtung zumindest teilweise ausfüllt, wobei die gegeneinander abzudichtenden Rohre (2, 4) vor dem Einbringen oder unmittelbar nach dem Einbringen, aber vor dem Aushärten bzw. Abbinden der anorganischen Dichtmasse (8) in ihrer gegenseitigen Lage fixiert werden, dadurch gekennzeichnet, daß die gegeneinander abzudichtenden Rohre (2, 4) durch Auftragen eines schnell aushärtenden Klebers (6) in Teilbereichen des Spaltraumes fixiert werden.

12. Verfahren nach Anspruch 11, dadurch gekennzeichnet, daß die gegeneinander abzudichtenden Rohre (2, 4) durch einen mittels UV-Strahlung aushärtbaren Kleber (6) fixiert werden.

## Claims

1. A pipe connection for the sealing connection of two pipes, in particular for flue gas lines, in which one end of a first pipe (4), possibly constructed as a union nut, surrounds a plain end of a second pipe (2) to form a gap area, and in which the gap area is filled in in sealing manner with an inorganic sealant (8), at least partially in the axial direction but completely filling in the annular gap, the pipes (2, 4) to be sealed to one another being fixed to one another by fixing means, characterized in that the fixing means are adhesive points which are mounted in the pipes (2,4) to be sealed by application to subdomains of the gap area and which are of a quick-hardening adhesive (6).

2. A pipe connection according to Claim 1, characterized in that the quick-hardening adhesive is an adhesive (6) which may be hardened by means of UV radiation.

3. A pipe connection according to Claim 1 or 2, characterized in that the sealing system is provided, on the side facing the inside of the pipeline, with a device (10) on which condensate separating for example from the exhaust gas or the exhaust air is deposited at a point which is predetermined for this purpose, and can drip back into the inside of the pipeline.

4. A pipe connection according to Claim 3, characterized in that the device (10) comprises a round mineral cord (10) placed in the gap area (B).

5. A pipe connection according to one of Claims 1-4, characterized in that the pipes (2, 4) to be sealed to one another are manufactured from ceramic materials, glazed or unglazed.

6. A pipe connection according to one of Claims 1-4, characterized in that the pipes (2, 4) to be sealed to one another are manufactured from glass.

7. A pipe connection according to Claim 6, characterized in that the end of the first pipe (4) has a socket and in that arranged in the joint gap, between the end face of the second pipe end and the inner shoulder of the socket of the first pipe end, there is a spacer ring (A) of a mineral material.

8. A pipe connection according to one of Claims 1-4, characterized in that the pipes to be sealed to one another are manufactured from a metal material, preferably special steel.

9. A pipe connection according to one of Claims 1-8, characterized in that the sealant (8) is chemically hardening.

10. A sealant (8) for a pipe connection according to one of Claims 1-9, characterized in that the sealant (8) has a thermal expansion coefficient of 3.3 - 12 × 10⁻⁶ K⁻¹ for the sealing connection of pipes (2, 4) of flue gas lines.

11. A process for the sealing connection of two pipes, in particular of a flue gas line, in which one end of a first pipe (4), possibly constructed as a union nut, surrounds a plain end of a second pipe (2) to form a gap area, wherein, after the pipe ends have been joined together, an inorganic sealant (8) is introduced into the gap area, this sealant (8) forming a sealing ring and thus at least partially filling in the gap area in the axial direction, the pipes (2, 4) to be sealed to one another being fixed in their relative positions before or immediately after said introduction, but before the inorganic sealant (8) has hardened or set, characterized in that the pipes (2, 4) to be sealed to one another are fixed in subdomains of the gap area by application of a quick-hardening adhesive (6).

12. A process according to Claim 11, characterized in that the pipes (2, 4) to be sealed to one another are fixed by an adhesive (6) which may be hardened by means of UV radiation.

## Revendications

1. Raccord de tuyaux pour raccorder de façon étanche deux tuyaux, notamment pour des conduits d'évacuation de gaz de combustion, dans lequel une extrémité d'un premier tuyau (4), le cas échéant conformée en manchon de raccordement, entoure une extrémité lisse d'un second tuyau (2) en formant un interstice et dans lequel l'interstice est rempli de manière étanche, au moins partiellement dans la direction axiale, mais complètement dans la direction circonférencielle, d'une masse d'étanchéité (8) minérale, les tuyaux (2, 4) à assembler de manière étanche étant fixés l'un à l'autre par des moyens de fixation, caractérisé par le fait que les moyens de fixation sont des points de colle constitués d'un adhésif (6) à durcissement rapide qui sont appliqués sur les tuyaux (2, 4) à assembler dans des zones de l'interstice.

2. Raccord de tuyaux selon la revendication 1, caractérisé par le fait que l'adhésif à durcissement rapide est une colle durcissable par des rayons UV.

3. Raccord de tuyaux selon la revendication 1 ou 2, caractérisé par le fait que le système d'étanchéité est pourvu, du côté tourné vers l'intérieur du conduit, d'un dispositif (10) sur lequel les produits de condensation séparés des gaz de combustion ou de l'air pollué se déposent en des points prévus à cet effett et s'écoulent vers l'intérieur du conduit.

4. Raccord de tuyaux selon la revendication 3, caractérisé par le fait que le dispositif (10) se compose d'un cordon rond (10) minéral qui est placé dans l'interstice (B).

5. Raccord de tuyaux selon l'une des revendications 1-4, caractérisé par le fait que les tuyaux à assembler (2, 4) de manière étanche sont réalisés en matériaux céramiques vernissés ou non.

6. Raccord de tuyaux selon l'une des revendications 1-4, caractérisé par le fait que les tuyaux à assembler (2, 4) de manière étanche sont réalisés en verre.

7. Raccord de tuyaux selon la revendication 6, caractérisé par le fait que l'extrémité du premier tuyau (4) comporte un manchon et qu'une bague d'espacement (A) en matériau minéral est disposée dans le joint d'about entre la face frontale de l'extrémité du second tuyau et l'épaulement intérieur du manchon de l'extrémité du premier tuyau.

8. Raccord de tuyaux selon l'une des revendications 1-4, caractérisé par le fait que les tuyaux à assembler (2, 4) de manière étanche sont réalisés en matériau métallique, de préférence en acier allié.

9. Raccord de tuyaux selon l'une des revendications 1-8, caractérisé par le fait que la masse d'étanchéité (8) est durcisable par voie chimique.

10. Masse d'étanchéité (8) pour un raccord de tuyaux selon l'une des revendications 1-9, caractérisé par le fait que la masse d'étanchéité (8) présente un coefficient de dilatation thermique de 3,3 - 12 x 10⁻⁶K⁻¹ pour assembler de manière étanche des tuyaux (2,4) de conduit d'évacuation de gaz de combustion.

11. Procédé pour raccorder de manière étanche deux tuyaux, notamment d'un conduit d'évacuation des gaz de combustion, dans lequel une extrémité d'un premier tuyau (4), le cas échéant conformée en manchon de raccordement, entoure une extrémité lisse d'un second tuyau (2) en formant un interstice, une masse d'étanchéité (8) minérale étant introduite dans l'interstice après assemblage des extrémités des tuyaux, masse d'étanchéité qui remplit au moins partiellement l'interstice dans la direction axiale, en formant un joint annulaire, les extrémités de tuyaux (2, 4) à raccorder de manière étanche étant immobilisées dans leur position réciproque avant l'application de la masse d'étanchéité (8) ou immédiatement après l'application de celle-ci, mais avant son durcissement ou sa prise, caractérisé par le fait que les tuyaux (2, 4) à raccorder de manière étanche sont immobilisés par application d'un adhésif (6) à durcissement rapide.

12. Procédé selon la revendication 11, carcatérisé par le fait que les tuyaux (2, 4) à raccorder de manière étanche sont immobilisés à l'aide d'une colle (6) durcissable par rayons UV.
